# EUROPÄISCHE PATENTANMELDUNG

(11) **EP 3 667 231 A1**
(43) Veröffentlichungstag der Anmeldung: **17.06.2020**
(21) Anmeldenummer: 18212355.4
(22) Anmeldetag: 13.12.2018
(51) Int. Cl.: G01B 11/30, G01J 5/00, G01N 21/00

(54) **VERFAHREN ZUR ERFASSUNG DER OBERFLÄCHENBESCHAFFENHEIT VON BAUTEILEN, VERWENDUNG DES VERFAHRENS ZUR KONTROLLE DER OBERFLÄCHENGÜTE VON BAUTEILEN SOWIE VORRICHTUNG ZUR EINSTELLUNG DER OBERFLÄCHENBESCHAFFENHEIT VON BAUTEILEN**

(71) Anmelder: Henkel AG & Co. KGaA, 40589 Düsseldorf (DE)
(72) Erfinder: Schoene, Jens Roland, 85375 Neufahrn (DE)

(57) **Zusammenfassung**

Die vorliegende Erfindung betrifft Verfahren zur Erfassung von Unterschieden in der Oberflächenbeschaffenheit eines oder mehrerer Bauteils, bei dem die von dem Bauteil bei einer bestimmten Temperatur des Bauteils emittierte Infrarotstrahlung als Bestrahlungsstärke an einer vorgegebenen Empfängerfläche relativ zum Bauteil erfasst wird. Bei der Erfassung an unterschiedlichen Positionen oder mehreren Bauteilen wird sichergestellt, dass der von der Empfängerfläche abgedeckte Raumwinkel und Abstand zur Bauteiloberfläche nahezu unverändert ist. Unterschiede in der erfassten Bestrahlungsstärke können sodann mit Unterschieden in der Oberflächenbeschaffenheit der Bauteile gleichgesetzt werden. In weiteren Aspekten ist vorliegend die Verwendung solcher erfindungsgemäßen Verfahren zur Kontrolle und optional Einstellung der Oberflächengüte eines aus einem Fertigungsprozess stammenden Bauteils umfasst sowie eine Vorrichtung zur Einstellung der Oberflächenbeschaffenheit in der Serienproduktion von Bauteilen.

## Beschreibung

Die vorliegende Erfindung betrifft Verfahren zur Erfassung von Unterschieden in der Oberflächenbeschaffenheit eines oder mehrerer Bauteils, bei dem die von dem Bauteil bei einer bestimmten Temperatur des Bauteils emittierte Infrarotstrahlung als Bestrahlungsstärke an einer vorgegebenen Empfängerfläche relativ zum Bauteil erfasst wird. Bei der Erfassung an unterschiedlichen Positionen oder mehreren Bauteilen wird sichergestellt, dass der von der Empfängerfläche abgedeckte Raumwinkel und Abstand zur Bauteiloberfläche nahezu unverändert ist. Unterschiede in der erfassten Bestrahlungsstärke können sodann mit Unterschieden in der Oberflächenbeschaffenheit der Bauteile gleichgesetzt werden. In weiteren Aspekten ist vorliegend die Verwendung solcher erfindungsgemäßen Verfahren zur Kontrolle und optional Einstellung der Oberflächengüte eines aus einem Fertigungsprozess stammenden Bauteils umfasst sowie eine Vorrichtung zur Einstellung der Oberflächenbeschaffenheit in der Serienproduktion von Bauteilen.

Die Oberflächenbeschaffenheit von Werkstoffen nimmt in Fabrikationsprozess zu deren Herstellung oder in nachgelagerten Produktionsprozessen, die auf diesen Werkstoff zurückgreifen, häufig eine Schlüsselfunktion ein. Dies ist vordergründig der Fall beim Verkleben oder Abdichten metallischer Werkstoffe, da die Adhäsion der Kleb- und Dichtstoffe zum Werkstoff entscheidend von der Beschaffenheit der Metalloberfläche abhängt. Korrosionsprodukte oder Rückstände aus vorausgegangenen Fertigungsschritten können die Haftung auf den Metalloberflächen negativ beeinflussen. Die Kontrolle der Oberflächenbeschaffenheit ist daher beim stoffschlüssigen Fügen von Werkstoffen aller Art ein fester Bestandteil im Rahmen der Qualitätssicherung, und dies sowohl während als auch unmittelbar nach einem Fertigungsprozess zur Bereitstellung eines Halbzeuges oder eines fertig gefügten Bauteils. Durch eine rechtzeitige, also produktionsnahe, Bestimmung der Oberflächenbeschaffenheit der bei der Herstellung komplexer Bauteile verwendeten Werkstoffe lässt sich der Fertigungsprozess adaptieren, beispielsweise können gezielte Maßnahmen zur Oberflächenbehandlung eingeleitet werden, um eine für den Fertigungsprozess anderenfalls nachteilige Oberflächenbeschaffenheit eines Werkstoffes zu beseitigen. Obwohl im Stand der Technik eine schier unüberschaubare Vielzahl oberflächenanalytischer Methoden existiert, besteht weiterhin Bedarf zur Bereitstellung an Methoden, die eine Überwachung der Oberflächenbeschaffenheit von Werkstoffen bei ihrer weiteren Veredelung, sei es durch Formen, Fügen, Abdichten oder Beschichten, also während eines Fabrikationsprozesses erlauben. Die vorliegende Erfindung stellt sich hierbei die Aufgabe ein Verfahren zu etablieren, dass eine innerhalb weniger Sekunden oder bestenfalls Sekundenbruchteilen erfolgende Beurteilung der Oberflächenbeschaffenheit von Werkstoffen, insbesondere Metallen, ermöglicht, zudem zerstörungsfrei und berührungslos arbeitet und nicht erfordert, dass der zu untersuchende Werkstoff vorübergehend aus dem eigentlichen Fertigungsprozess entfernt wird. Vornehmliches Ziel ist es im Stande zu sein, Unterschiede in der Oberflächenbeschaffenheit festzustellen oder erkennen zu können, um so eine Aussage über Beschaffenheit eines Flächenbereiches des Werkstoffes treffen zu können. Etablierte zerstörungsfreie oberflächenanalytische Methoden wie Röntgenfluoreszenz, energiedispersive Röntgenspektroskopie oder Röntgenphotoelektronenspektroskopie sind Vakuumtechnologien und daher im Regelfall nicht geeignet, um die Oberflächengüte eines Werkstoffes in einem industriellen Fertigungsprozess einzufangen.

Die hier beschriebene Erfindung macht sich die Eigenschaft von Werkstoffen zunutze, elektromagnetische Strahlung im Infrarotbereich zu emittieren, wobei insoweit Unterschiede im Emissionsgrad einer Oberfläche eines individualisierten Bauteils bestimmt oder sichtbar gemacht werden, diese Unterschiede mit Unterschieden in der Oberflächenbeschaffenheit des Bauteils korrespondieren.

Das physikalische Phänomen, dass jeder Werkstoff einen stoffspezifischen Emissionsgrad aufweist, ist selbstverständlich allgemein bekannt, jedoch wird diese Stoffeigenschaft bisher vordergründig nur für die berührungslose Temperaturmessung bestimmt und nicht zur Aufklärung und Beurteilung der stofflichen Oberflächenbeschaffenheit einer Werkstoffoberfläche.

Die der Erfindung zugrundeliegende Aufgabe wird daher gelöst durch ein Verfahren zur Erfassung von Unterschieden in der Oberflächenbeschaffenheit eines Bauteils, bei dem die von dem Bauteil bei einer bestimmten Temperatur des Bauteils emittierte Infrarotstrahlung als Bestrahlungsstärke an einer vorgegebenen Empfängerfläche an mindestens zwei unterschiedlichen Positionen relativ zum Bauteil erfasst wird, wobei die Positionierung derart erfolgt, dass der Abstand dreier Fixpunkte auf der Empfängerfläche zur Bauteiloberfläche entlang ihrer Flächennormalen bei der jeweiligen Position der Empfängerfläche im Wesentlichen unverändert bleibt, wobei die Positionsabhängigkeit der erfassten Bestrahlungsstärke mit Unterschieden in der Oberflächenbeschaffenheit des Bauteils gleichgesetzt wird.

Der Begriff des Bauteils umfasst dabei einen jeglichen aus einem Werkstoff oder einer Werkstoffkombination gefertigten Festkörper und damit auch Halbzeuge, die ihrerseits weiteren Fertigungsschritten zur Herstellung komplexerer Bauteile, bspw. durch Umformen und stoffschlüssiges Fügen durch Verkleben oder Abdichten, unterfallen.

Die "Empfängerfläche" kann eben oder gekrümmt sein, vorzugsweise ist sie eben oder als Kugelfläche mit einem Raumwinkel von weniger als 2π sr ausgestaltet. Bei der Ausgestaltung als Kugelfläche kann die Empfängerfläche gemäß vorliegender Erfindung auch aus einer Vielzahl ebener Teilflächen bestehen, deren Flächennormalen auf einen gemeinsamen Fixpunkt weisen. Eine Empfängerfläche ist im Rahmen der vorliegenden Erfindung geeignet, die auf sie auftreffende Infrarotstrahlung in einem vorgegebenen Wellenlängenbereich oder bei einer vorgegebenen Wellenlänge in ein physikalisches Signal umzuwandeln, das proportional zum auf der Empfängerfläche aufgenommen Strahlungsfluss also der Bestrahlungsstärke im vorgegebenen Wellenlängenbereich oder bei der vorgegebenen Wellenlänge ist. Die Bestrahlungsstärke, im technischen Sprachgebrauch auch Strahlungsflussdichte genannt, entspricht dem von der Empfängerfläche erfassten Strahlungsfluss. Sie hat die Einheit Watt pro Quadratmeter. Dementsprechend ist es erfindungsgemäß bevorzugt, wenn die Empfängerfläche zur Erfassung der Bestrahlungsstärke die lichtempfindliche Fläche eines pyroelektrischen Sensors (auch PIR Sensor genannt) darstellt und damit von einem pyroelektrische Material gebildet wird, dessen Spezifizierung wiederum lediglich von der Auswahl des bevorzugten infraroten Wellenlängenbereiches abhängt über den die Erfassung der Bestrahlungsstärke von der Empfängerfläche erfolgen soll. Dabei kann es je nach Wellenlängenabhängigkeit des Emissionsgrades des Materials des Bauteils und der Oberflächenbestandteile oder der Infrarotdurchlässigkeit von etwaigen Dünnschichten auf dem Bauteil vorteilhaft sein einen spezifischen Wellenlängenbereich für die Erfassung der Bestrahlungsstärke und damit auch einen spezifischen PIR-Sensor auszuwählen. Üblicherweise und damit bevorzugt erfolgt die Erfassung der vom Bauteil emittierten Infrarotstrahlung über einen Wellenlängenbereich oder bei einer Wellenlänge, die im Bereich von 1,0.10⁻⁶ bis 1,0·10⁻⁴ m, besonders bevorzugt im Bereich von 3,0·10⁻⁶ bis 2,0·10⁻⁵ m liegt.

Für die Feststellung von Unterschieden in der Oberflächenbeschaffenheit eines Bauteils ist es erforderlich, dass die Erfassung der Bestrahlungsstärke an mindestens zwei Positionen relativ zum Bauteil erfolgt. Die Erfassung an mindestens zwei Positionen kann simultan oder zeitlich getrennt erfolgen; erfolgt die Erfassung simultan wird üblicherweise ein Array von Empfängerflächen verwendet, deren Flächennormalen im geometrischen Schwerpunkt vorzugsweise nicht konvergent sind und besonders bevorzugt parallel zu einander verlaufen, bspw. bei der Erfassung der vom einer ebenen Teilfläche des Bauteils emittierten Infrarotstrahlung.

Ändert sich die relative Lage der Empfängeroberfläche zum Bauteil bei der Erfassung der Bestrahlungsstärke derart, dass ihr Abstand zur Bauteiloberfläche variiert, ist eine Korrelation der Bestrahlungsstärke mit der Oberflächenbeschaffenheit bei ansonsten gleicher Temperatur streng genommen nicht mehr gegeben. Es ist daher erfindungsgemäß erforderlich, dass der Abstand dreier Fixpunkte auf der Empfängerfläche zur Bauteiloberfläche entlang ihrer Flächennormalen bei der jeweiligen Position der Empfängerfläche während der Erfassung der Bestrahlungsstärke im Wesentlichen unverändert bleibt. Ein Fixpunkt auf der Empfängeroberfläche ist dabei ein innerhalb der zweidimensionalen Ausgestaltung der Empfängerfläche eindeutig definierter Ortspunkt. Die jeweilige Position der Empfängerfläche relativ zum Bauteil gilt diesbezüglich als im Wesentlichen unverändert, wenn die Beabstandung der jeweiligen Fixpunkte von der Bauteiloberfläche bei der Erfassung an unterschiedlichen Positionen oberhalb des Bauteils jeweils um nicht mehr als 20%, vorzugsweise um nicht mehr als 10%, besonders bevorzugt um nicht mehr als 5%, ganz besonders bevorzugt um nicht mehr als 2 % vom arithmetischen Mittelwert der Beabstandung abweichen.

Für die Darstellung der Unterscheide in der Oberflächenbeschaffenheit des Bauteils ist offensichtlich bevorzugt, dass die Positionsabhängigkeit der erfassten Bestrahlungsstärke in eine Ortsabhängigkeit auf der Oberfläche des Bauteils umgewandelt wird. Dies wird dadurch erzielt, dass der Ort des geometrischen Schwerpunkts der Empfängerfläche in der jeweiligen Position, bei der die Bestrahlungsstärke erfasst wird, entlang der Flächennormalen im geometrischen Schwerpunkt auf die Oberfläche des Bauteils projiziert wird. Über den auf diese Weise auf die Oberfläche des Bauteils projizierten Ort wird die erfasste Bestrahlungsstärke mit einem Ort auf der Oberfläche des untersuchten Bauteils korreliert. Weiterhin ist dann für die Darstellung der Unterschiede in der Oberflächenbeschaffenheit erfindungsgemäß bevorzugt, dass ein ortsabhängiges Mapping der Oberfläche des Bauteils erfolgt, indem die Erfassung der Bestrahlungsstärke an der Empfängerfläche an einer Vielzahl unterschiedlicher Positionen relativ zum Bauteil erfolgt, wobei sämtliche Positionen bzw. die drei Fixpunkte auf den Empfängerflächen dann vorzugsweise jeweils in drei zueinander parallel verlaufenden Fläche liegen, die wiederum kongruent zur Topographie der Oberfläche des Bauteils sind, so dass gewährleistet ist, dass die erfasste Bestrahlungsstärke jeweils bei gleicher Beabstandung und Orientierung der Empfängerfläche zur gemappten Oberfläche des Bauteils erfolgt.

In einer bevorzugten Ausführungsform des erfindungsgemäßen Verfahrens erfolgt die Darstellung der Positionsabhängigkeit oder Ortsabhängigkeit der erfassten Bestrahlungsstärke mittels Falschfarbendarstellung. Auf diese Weise sind die Unterschiede in der Oberflächenbeschaffenheit für den Fachmann auf einen Blick sichtbar. Dies kann bei der stichprobenhaften Überwachung der Oberflächenbeschaffenheit in der Serienproduktion von Bauteilen von Vorteil sein, oder auch dann, wenn bei einer ansonsten rein computergestützten Überwachung auf Abfrage eine visuelle Darstellung der Oberflächenbeschaffenheit eines individualisierten Bauteils bereitgestellt werden soll.

Gerade bei einem Mapping der Oberflächenbeschaffenheit oder allgemein bei der Bestimmung der Oberflächenbeschaffenheit einer Vielzahl gleichartiger Bauteil, bspw. in der Qualitätsüberwachung einer Serienproduktion, kann es von Vorteil sein, wenn zur Erfassung der Bestrahlungsstärke bei einer vorgegebenen und über sämtliche Bestimmungen konstanten Temperatur des oder der Bauteil die Temperatur des- oder derselben mit einem Temperaturfühler bestimmt wird, wobei der oder die Bauteil zur Einstellung einer bestimmten Temperatur vorzugsweise mit einer Wärmequelle oder -senke verbunden sind. Auf diese Weise kann passiv festgestellt werden, ob Temperaturkonstanz gegeben ist und ggf. auf für eine vordefinierte Temperatur, die möglicherweise zur Bestimmung der Oberflächenbeschaffenheit eines bestimmten Bauteils besonders geeignet ist, auf Temperaturkonstanz geregelt werden. Die Temperatur, bei der die Erfassung der Bestrahlungsstärke erfolgt, ist im erfindungsgemäßen Verfahren nicht festgelegt und kann beliebige Wert einnehmen. Praxisrelevant ist ein Temperaturbereich von -10 bis 300 °C.

In diesem Zusammenhang werden in erfindungsgemäßen Verfahren besonders trefflich Oberflächen solcher Bauteil analysiert, die thermische Energie gut dissipieren und nicht dazu neigen Temperaturunterschiede im Bauteil nur sehr langsam auszugleichen. Es ist daher bevorzugt, dass der Bauteil eine Wärmeleitfähigkeit von mindestens 1 Wm⁻¹K⁻¹ aufweist und besonders bevorzugt metallisch ist und insbesonders bevorzugt aus einem metallischen Material ausgewählt aus Zinn, Titan, Aluminium, Magnesium, Eisen, Zink, Chrom, Nickel oder Kupfer sowie deren Legierungen gefertigt ist. Letztere Auswahl betrifft Metalle, die native Oxidschichten bilden und Korrosionsprozessen unterliegen, so dass deren Oberflächenbeschaffenheit in der industriellen Fertigung von Bauteilen, die diese Werkstoffe umfassen, in der Regel von großer Bedeutung für die Funktionalität oder Weiterverarbeitbarkeit, bspw. in Klebe- und Fügeprozessen, des Bauteils ist. Der Begriff "metallisches Bauteil" umfasst im Rahmen der vorliegenden Erfindung auch metallische Überzüge auf metallischen oder nichtmetallischen Substraten, beispielsweise vernickeltes Acrylnitril-Butadien-Styrol oder verzinktes oder alitiertes (= aluminiertes) Stahlband.

In einer besonderen Ausgestaltung des erfindungsgemäßen Verfahrens erfolgt die Bestimmung von Unterschieden in der Oberflächenbeschaffenheit eines vorzugsweise metallischen Bauteils auf einem beschichteten oder einen Nassfilm aufweisenden Bauteil, wobei die Beschichtung bzw. der Nassfilm jeweils im erfassten Wellenlängenbereich oder bei der jeweiligen erfassten Wellenlänge im Wesentlichen transparent ist. Im Wesentlichen "transparent" ist eine Beschichtung oder ein Nassfilm, wenn die wellenlängenabhängige Absorption in der Beschichtung bzw. im Nassfilm gemessen mit ATR-Infrarotspektroskopie bei einem Einfallswinkel von 45° nach Background-Kompensation und Savitzky-Golay-Korrektur im jeweiligen Wellenlängenbereich bzw. bei der jeweiligen Wellenlänge weniger als 30%, vorzugsweise weniger als 20% beträgt.

In einer Variante des zuvor beschriebenen Verfahrens erfolgt die Korrelation der erfassten Bestrahlungsstärken auch mit derjenigen, die von anderen, aber aus demselben Werkstoff gefertigten Bauteilen mit normierter oder bekannter Oberflächenbeschaffenheit emittiert und gleichartig erfasst wird. Dies ermöglicht die Darstellung des Grades der Abweichung oder Identität der Oberflächenbeschaffenheit von Bauteilen mit einem gewünschten Referenzwert. Ein solches Verfahren zur Erfassung von Unterschieden in der Oberflächenbeschaffenheit von mindestens zwei aus dem gleichen Werkstoff gefertigten Bauteilen, bei dem die von den Bauteilen bei einer bestimmten Temperatur des jeweiligen Bauteils emittierte Infrarotstrahlung als Bestrahlungsstärke an einer vorgegebenen Empfängerfläche an mindestens einer Position relativ zu jedem einzelnen Bauteil erfasst wird, ist ebenfalls Gegenstand der vorliegenden Erfindung und zeichnet sich dadurch aus, dass die Erfassung der von jedem einzelnen Bauteil emittierten Bestrahlungsstärke stets derart erfolgt, dass der Abstand dreier Fixpunkte auf der Empfängerfläche zur jeweiligen Bauteiloberfläche entlang ihrer Flächennormalen an der mindestens einen Position der Empfängerfläche relativ zum jeweiligen Bauteil sowie die Temperatur jedes einzelnen Bauteils im Wesentlichen unverändert bleibt, wobei Unterschiede in der an der Empfängerfläche erfassten Bestrahlungsstärke der Bauteile untereinander mit Unterschieden in der Oberflächenbeschaffenheit der Bauteile gleichgesetzt werden. Die Temperatur bei der Erfassung der als Bestrahlungsstärke emittierten Infrarotstrahlung eines jeden Bauteils ist dann im Wesentlichen unverändert, wenn die Abweichung vom arithmetischen Mittelwert kleiner als 20%, vorzugsweise kleiner als 10%, besonders bevorzugt kleiner als 5% und insbesondere bevorzugt kleiner als 2% ist.

In einem weiteren Aspekt betrifft die vorliegende Erfindung die Verwendung eines der beiden zuvor beschriebenen erfindungsgemäßen Verfahren, einschließlich der im Zusammenhang mit diesen Verfahren dargelegten bevorzugten Ausführungsformen, zur Kontrolle und optional Einstellung der Oberflächengüte eines aus einem Fertigungsprozess stammenden Bauteils. Hierfür wird bevorzugt so verfahren, dass der Ist-Wert der Oberflächengüte zunächst mit der gemäß einem der beiden zuvor beschriebenen Verfahren erfassten Bestrahlungsstärke, die als Infrarotstrahlung von einem Bauteil emittiert wird, gleichgesetzt wird und sodann mit der von einem identischen Bauteil, das eine gewünschte Oberflächengüte aufweist, identisch erfassten Bestrahlungsstärke als Soll-Wert der Oberflächengüte verglichen und der Bauteil bzw. das Bauteil hinsichtlich einer vorgegebenen Toleranz für die Abweichung von Soll- und Ist-Wert überprüft und qualitativ eingestuft wird. Die Bestrahlungsstärke an zwei verschiedenen Bauteilen ist identisch erfasst, wenn hierfür identische Empfängerflächen eingesetzt werden und der Abstand dreier Fixpunkte auf der Empfängerfläche zur jeweiligen Oberfläche des Bauteils entlang ihrer Flächennormalen an der Position der Empfängerfläche, bei der die Bestrahlungsstärke erfasst wird, relativ zum jeweiligen Bauteil sowie die Temperatur jedes einzelnen Bauteils im Wesentlichen unverändert bleibt. Die Temperatur und die Beabstandung der Fixpunkte von der Oberfläche des Bauteils ist dann im Wesentlichen unverändert, wenn die Abweichung vom arithmetischen Mittelwert der Temperatur bzw. der Beabstandung im jeweiligen Fixpunkt weniger als 20%, vorzugsweise weniger als 10%, besonders bevorzugt weniger als 5% und insbesondere bevorzugt weniger als 2% beträgt.

Der Ist-Wert der Oberflächengüte des Bauteils wird vorzugsweise bei einer Temperatur des Bauteils im Bereich von -10 bis 300 °C bestimmt, besonders bevorzugt bei einer Temperatur, bei der der chemische Oberflächenzustand des Bauteils keine Umwandlung, bspw. Verzunderung oder Kristallisation, erfährt und bei der zugleich die Unterschiede im Emissionsgrad der Oberflächenzustände maximal sind. Der Fachmann kann also je nach Werkstoff des Bauteils und Fragestellung an den Oberflächenzustand eine Vorauswahl für die Temperatur des Bauteils bzw. der Bauteile treffen, bei der die Erfassung der Bestrahlungsstärke erfolgen soll.

Die Verfahren zur Bestimmung von Unterscheiden in der Oberflächenbeschaffenheit von Bauteilen werden erfindungsgemäß bevorzugt eingesetzt, um bei einer Serienproduktion die Güte einer Materialoberfläche zu bestimmen und ggf. einzelne Bauteile aus dem Fabrikationsprozess heraus zu schleusen oder individuell zu behandeln, so dass die gewünschte Güte erzielt wird, oder in zumindest einer der Bestimmung der Oberflächenbeschaffenheit vorausgehenden Fabrikationsstufen, den Prozess so zu justieren, dass die gewünschte Oberflächengüte in der Serienproduktion wieder hergestellt ist.

Bevorzugt ist daher eine erfindungsgemäße Verwendung, bei der das Bauteil bei einer Abweichung des Ist-Wertes der Oberflächengüte von deren Soll-Wert, die nicht mehr innerhalb der vorgegebenen Toleranz liegt, einer Oberflächenbehandlung unterzogen wird und ggf. erneut die Abweichung des Ist-Wertes der Oberflächengüte von dessen Sollwert bestimmt wird, und der Prozess der Oberflächenbehandlung so oft wiederholt wird, bis der Ist-Wert der Oberflächengüte innerhalb der vorgegebenen Toleranz liegt. Eine geeignete Anwendung liegt beim stoffschlüssigen Verbinden mittels Verkleben oder Abdichten von Bauteilen. Hier wird es für eine ausreichende Adhäsion zu den zu verklebenden Bauteilen regelmäßig darauf ankommen, dass die Bauteiloberflächen eine hierfür geeignete Oberflächenbeschaffenheit haben und metallische Bauteile beispielsweise frei von Rost und organischen Verunreinigungen wie Umformölen sind, ehe sie mit dem Klebstoff oder Dichtungsmittel zur dauerhaften stoffschlüssigen Verbindung in Kontakt gebracht werden. Hier kann es erforderlich sein, dass einzelne Bauteile erneut eine Reinigung durchlaufen bis der gewünschte Oberflächenzustand, wie erfindungsgemäß erfasst, hergestellt ist.

Alternativ bevorzugt ist bei einer Serienproduktion von Bauteilen umfassend eine Vielzahl an Prozessschritten eine erfindungsgemäße Verwendung, bei der bei einer Abweichung des Ist-Wertes der Oberflächengüte auf einem Bauteil von deren Soll-Wert, die nicht mehr innerhalb der vorgegebenen Toleranz liegt, in einem der Bestimmung der Oberflächengüte vorausgehenden Prozessschritt eine Regelung eines Fabrikationsparameters derart erfolgt, dass der Ist-Wert der Oberflächengüte für nachfolgend produzierte Bauteile wiederum innerhalb der vorgegebenen Toleranz liegt. Geeignete Anwendungsfelder ergeben sich hier insbesondere für metallische Bauteile, die im Rahmen einer Serienproduktion unterschiedlichen Prozessschritte durchlaufen, da hier der Oberflächenzustand der Bauteile für nachrangige Prozessschritte oftmals von großer Bedeutung für die Qualität und Funktionalität der Endfabrikate ist. Beispielsweise erfolgt bei Herstellung von Metallband wie schmelztauchveredelten Stahlband eine nasschemische Passivierung der Metalloberflächen, für deren Performanz eine möglichst homogene dünne Schichtauflage der passivierenden zumeist anorganischen Beschichtung realisiert sein muss. Das erfindungsgemäße Verfahren eignet sich nun hervorragend für die Bestimmung der Oberflächenbeschaffenheit der Bandpassivierung insoweit ein pyroelektrischer Sensor ortsfest relativ zum Transportband des dann kontinuierlich an dem Sensor vorbeilaufenden Metallbandes angebracht ist und die erfasste Bestrahlungsstärke quasikontinuierlich elektronisch erfasst und als Datenpaket an eine Datenverarbeitungsanlage weitergibt, die bei Abweichungen außerhalb der Toleranz eine Justierung der Nassfilmauflage des Passivierungsmittels oder der Stellung der Auftragswalzen relativ zur Bandoberfläche vorsieht, so dass nunmehr eine ausreichende Menge einer Passivierung auf allen Bereichen des Bandes realisiert ist.

Eine im Zusammenhang mit der Verwendung der beiden erfindungsgemäßen Verfahren bevorzugte Variante im Rahmen der Serienproduktion von Bauteilen umfassend eine Vielzahl an Prozessschritten die Information über den Grad der Abweichung des Ist-Wertes der Oberflächengüte eines jeden Bauteils der Serie von dem Soll-Wert an einer festgelegten Fertigungsstufe mindestens einem Regler zugeführt wird, der jeweils eine vom Grad der Abweichung eineindeutig abhängige Stellgröße für einen Prozessparameter in einem der Erfassung des Ist-Wertes der Oberflächengüte vorausgehenden Prozessschritt ausgibt, wobei die Stellgröße eine solche Änderung des Wertes des Prozessparameters herbeiführt, die den Ist-Wert der Oberflächengüte desjenigen Bauteils an der festgelegten Fertigungsstufe, das den vorausgehenden Prozessschritt mit verändertem Prozessparameter durchläuft, im Vergleich zum Ist-Wert des Bauteils, dessen Abweichung vom Soll-Wert ursächlich für die Stellgröße ist, näher an den Soll-Wert der Oberflächengüte heranführt.

Generell sind also solche Verwendungen der beiden erfindungsgemäßen Verfahren zur Bestimmung von Unterschieden in der Oberflächenbeschaffenheit bevorzugt, die die Serienproduktion von Bauteilen unter Durchführung einer Vielzahl von Prozessschritten betreffen und/oder in denen das vorzugsweise metallische Bauteil nach der Kontrolle und optional Einstellung der Oberflächengüte einem weiteren Fertigungsprozess zugeführt wird, der das stoffschlüssige Verbinden, vorzugsweise durch Verkleben, mit einem gleichen oder anderen Bauteil, die Aufbringung einer Beschichtung oder eines Materials umfasst.

Für die erfindungsgemäße Verwendung eignen sich wie bereits dargelegt in besonderem Maße metallische Bauteile, die wiederum vorzugsweise ausgewählt sind aus einem Band, Blech, Rohr, Profil, Gussteil, Behälter, einer (Getränke-)Dose oder einer (Automobil)Karosse bzw. eines (Automobil)Karossenteils.

In einem weiteren Aspekt betrifft die vorliegende Erfindung eine Vorrichtung zur Einstellung der Oberflächenbeschaffenheit in der Serienproduktion von Bauteilen und bspw. zur Sicherung einer gleichbleibenden Oberflächengüte der gefertigten Bauteile umfassend
i) eine Messvorrichtung geeignet zur Durchführung eines Verfahrens gemäß einem oder mehreren der Ansprüche 1 bis 9 umfassend
   a) eine Empfängerfläche zur Messung von Infrarotstrahlung und geeignet zur Ausgabe einer zur an der Empfängerfläche erfassten Bestrahlungsstärke proportionalen physikalischen Größe, vorzugsweise eines zur Bestrahlungsstärke proportionalen elektrischen Spannungssignals;
   b) eine Transportvorrichtung, die dazu bestimmt ist, die einzelnen Bauteile der Serie an der Empfängerfläche der Messvorrichtung derart vorbeizuführen, dass die Bestimmung der Bestrahlungsstärke an der Empfängerfläche als vom Bauteil emittierte Infrarotstrahlung an mindestens einer definierten Position relativ zum Bauteil ermöglicht wird; und
   c) optional eine Temperiereinheit geeignet zur Einstellung einer im Wesentlichen gleichen Temperatur des Bauteils zum Zeitpunkt seines Vorbeigeführens ens an der Empfängerfläche der Messvorrichtung umfassend ein Heiz- und/oder Kühlelement und ggf. einen Temperaturfühler;
ii) einen Regler, der ausgelegt ist, die von der Messvorrichtung herausgegebene und zur an der Empfängerfläche erfassten Bestrahlungsstärke proportionale physikalische Messgröße als Ist-Wert der Oberflächenbeschaffenheit mit einem Referenzwert der gleichen physikalischen Messgröße als Soll-Wert der Oberflächenbeschaffenheit abzugleichen und eine zur Abweichung von Ist- und Sollwert eineindeutige Steuergröße an eine Stelleinrichtung auszugeben; und
iii) eine Stelleinrichtung, die geeignet ist die Steuergröße in eine Stellgröße für einen Prozessparameter in einem der Erfassung des Ist-Wertes der Oberflächengüte vorausgehenden Prozessschritt umzusetzen,
wobei Messvorrichtung, Regler und Stelleinrichtung einen Regelkreis zur Minimierung der Abweichung von Ist- und Sollwert der Oberflächenbeschaffenheit bilden.

Eine solche Vorrichtung ermöglicht das bei einer Serienproduktion von Bauteilen, die Oberflächenbeschaffenheit der Bauteile auf einer bestimmten Fertigungsstufe auf eine gewünschte Oberflächenbeschaffenheit getrimmt wird, ohne dass aufwendige Analysen der chemischen Zusammensetzung der Oberflächenbeschaffenheit erforderlich sind und die Serienproduktion für eine solche chemische Analyse zwischenzeitlich gestoppt werden müsste. In einem Betriebsversuch kann so bereits mit allgemeingültigen Erfahrungswissen eine Oberflächenbehandlung, bspw. nasschemische Passivierungs- oder Reinigungsstufe, angesetzt werden und die Produktionsanlage auf einen Referenzwert für die Bestrahlungsstärke der Infrarotstrahlung, der auf einem "Soll-Bauteil" an der Anlage vermessen und referenziert wird, als Soll-Wert der Oberflächenbeschaffenheit eingefahren werden. Nach Adaption und Optimierung der Stellgrößen kann dann nach kurzer Zeit bereits in den Produktionsbetrieb gewechselt werden. Die Adaption und Optimierung der Stellgrößen sowie die Überwachung der Oberflächenbeschaffenheit kann vorzugsweise mit Hilfe einer Datenverarbeitungsanlage nach Umwandlung der zu den relevanten Stellgrößen und Messsignale gehörenden analogen physikalischen Größen in digitale Daten erfolgen. Vorteilhafterweise werden die von der Messvorrichtung, dem Regler und der Stelleinrichtung ausgegebenen Signale sowie Steuer- und Stellgrößen von einer Schnittstelle abgegriffen und als Daten in digitaler Form elektronisch erfasst, um den Regelkreis in einer Datenverarbeitungsanlage steuern und überwachen zu können. In diesem Kontext ist weiterhin vorteilhaft, wenn die Schnittstelle ein Telemetriemodul umfasst, um eine Auslesemöglichkeit der von der Schnittstelle erfassten Daten an einem anderen Standort und/oder eine Übertragungsmöglichkeit der Daten an einen und/oder von einem anderen Standort bereitzustellen und um von diesem anderen Standort aus Datenpakete zur Einflussnahme auf den Regelkreis, bspw. auf den Regler und die ausgegebene Stellgröße.

## Patentansprüche

1. Verfahren zur Erfassung von Unterschieden in der Oberflächenbeschaffenheit eines Bauteils, bei dem die von dem Bauteil bei einer bestimmten Temperatur des Bauteils emittierte Infrarotstrahlung als Bestrahlungsstärke an einer vorgegebenen Empfängerfläche an mindestens zwei unterschiedlichen Positionen relativ zum Bauteil erfasst wird, wobei die Positionierung derart erfolgt, dass der Abstand dreier Fixpunkte auf der Empfängerfläche zur Bauteiloberfläche entlang ihrer Flächennormalen bei der jeweiligen Position der Empfängerfläche im Wesentlichen unverändert bleibt, wobei die Positionsabhängigkeit der erfassten Bestrahlungsstärke mit Unterschieden in der Oberflächenbeschaffenheit des Bauteils gleichgesetzt wird.

2. Verfahren nach einem oder mehreren der vorherigen Ansprüche, **dadurch gekennzeichnet, dass** die Positionsabhängigkeit der erfassten Bestrahlungsstärke in eine Ortsabhängigkeit auf der Bauteiloberfläche umgewandelt wird, indem die Projektion des Ortes des geometrischen Schwerpunkts der Empfängerfläche entlang der Flächennormalen auf die Oberfläche des Bauteils mit dem Ort der erfassten Bestrahlungsstärke gleichgesetzt wird.

3. Verfahren nach einem oder mehreren der vorherigen Ansprüche, **dadurch gekennzeichnet, dass** die Positionsabhängigkeit oder Ortsabhängigkeit der erfassten Bestrahlungsstärke mittels Falschfarbendarstellung erfolgt.

4. Verfahren zur Erfassung von Unterschieden in der Oberflächenbeschaffenheit von mindestens zwei aus dem gleichen Werkstoff gefertigten Bauteilen, bei dem die von den Bauteilen bei einer bestimmten Temperatur des jeweiligen Bauteils emittierte Infrarotstrahlung als Bestrahlungsstärke an einer vorgegebenen Empfängerfläche an mindestens einer Position relativ zu jedem einzelnen Bauteil erfasst wird, wobei die Erfassung der von jedem einzelnen Bauteil emittierten Bestrahlungsstärke stets derart erfolgt, dass der Abstand dreier Fixpunkte auf der Empfängerfläche zur jeweiligen Bauteiloberfläche entlang ihrer Flächennormalen an der mindestens einen Position der Empfängerfläche relativ zum jeweiligen Bauteil sowie die Temperatur jedes einzelnen Bauteils im Wesentlichen unverändert bleibt, wobei Unterschiede in der an der Empfängerfläche erfassten Bestrahlungsstärke der Bauteile untereinander mit Unterschieden in der Oberflächenbeschaffenheit der Bauteile gleichgesetzt werden.

5. Verfahren nach einem oder mehreren der vorherigen Ansprüche, **dadurch gekennzeichnet, dass** die Empfängerfläche zur Erfassung der Bestrahlungsstärke von einem pyroelektrischen Material gebildet wird.

6. Verfahren nach einem oder mehreren der vorherigen Ansprüche, **dadurch gekennzeichnet, dass** die Bestrahlungsstärke über einen Wellenlängenbereich oder bei einer Wellenlänge erfasst wird, die im Bereich von 1,0·10⁻⁶ bis 1,0·10⁻⁴ m, besonders bevorzugt im Bereich von 3,0·10⁻⁶ bis 2,0·10⁻⁵ m liegt.

7. Verfahren nach einem oder beidem der vorherigen Ansprüche, **dadurch gekennzeichnet, dass** die Temperatur des Bauteils bzw. der Bauteile mit einem Temperaturfühler bestimmt werden, wobei das jeweilige Bauteil zur Einstellung einer bestimmten Temperatur vorzugsweise mit einer Wärmequelle oder -senke verbunden ist.

8. Verfahren nach einem oder mehreren der vorherigen Ansprüche, **dadurch gekennzeichnet, dass** das Bauteil bzw. die Bauteile eine Wärmeleitfähigkeit von mindestens 1 Wm⁻¹K⁻¹ aufweisen und vorzugsweise metallisch sind und besonders bevorzugt aus einem metallischen Material ausgewählt aus Zinn, Titan, Aluminium, Magnesium, Eisen, Zink, Chrom, Nickel oder Kupfer sowie deren Legierungen gefertigt sind.

9. Verfahren nach einem oder mehreren der vorherigen Ansprüche, **dadurch gekennzeichnet, dass** das Bauteil bzw. die Bauteile eine Beschichtung oder einen Nassfilm aufweisen können, die jeweils im erfassten Wellenlängenbereich oder bei der jeweiligen erfassten Wellenlänge im Wesentlichen transparent sind.

10. Verwendung eines Verfahrens nach einem oder mehreren der vorherigen Ansprüche zur Kontrolle und optional Einstellung der Oberflächengüte eines aus einem Fertigungsprozess stammenden Bauteils.

11. Verwendung nach Anspruch 10, **dadurch gekennzeichnet, dass** als Ist-Wert der Oberflächengüte die in einem Verfahren gemäß der Ansprüche 1 bis 9 erfasste Bestrahlungsstärke, die als Infrarotstrahlung von dem Bauteil emittiert wird, mit der von einem identischen Bauteil, das eine gewünschte Oberflächengüte aufweist, identisch erfassten Bestrahlungsstärke als Soll-Wert der Oberflächengüte verglichen und ggf. das Bauteil hinsichtlich einer vorgegebenen Toleranz für deren Abweichung voneinander überprüft und/oder qualitativ eingestuft wird.

12. Verwendung nach Anspruch 11, **dadurch gekennzeichnet, dass** im Rahmen einer Serienproduktion von Bauteilen umfassend eine Vielzahl an Prozessschritten die Information über den Grad der Abweichung des Ist-Wertes der Oberflächengüte eines jeden Bauteils der Serie von dem Soll-Wert an einer festgelegten Fertigungsstufe mindestens einem Regler zugeführt wird, der jeweils eine vom Grad der Abweichung eineindeutig abhängige Stellgröße für einen Prozessparameter in einem der Erfassung des Ist-Wertes der Oberflächengüte vorausgehenden Prozessschritt ausgibt, wobei die Stellgröße eine solche Änderung des Wertes des Prozessparameters herbeiführt, die den Ist-Wert der Oberflächengüte desjenigen Bauteils an der festgelegten Fertigungsstufe, das den vorausgehenden Prozessschritt mit verändertem Prozessparameter durchläuft, im Vergleich zum Ist-Wert des Bauteils, dessen Abweichung vom Soll-Wert ursächlich für die Stellgröße ist, näher an den Soll-Wert der Oberflächengüte heranführt.

13. Verwendung nach einem oder mehreren der vorherigen Ansprüche 10 bis 13, **dadurch gekennzeichnet, dass** das Bauteil, das vorzugsweise metallisch ist, nach der Kontrolle und optional Einstellung der Oberflächengüte einem weiteren Fertigungsprozess, der das stoffschlüssige Verbinden, vorzugsweise durch Verkleben, mit einem gleichen oder anderen Bauteil, die Aufbringung einer Beschichtung oder eines Materials umfasst, zugeführt wird.

14. Verwendung nach einem oder mehreren der vorherigen Ansprüche 10 bis 14, **dadurch gekennzeichnet, dass** das Bauteil metallisch und ausgewählt ist aus einem Band, Blech, Rohr, Profil, Gussteil, Behälter, einer (Getränke-)Dose oder einer (Automobil-)Karosse bzw. eines (Automobil-)Karossenteils.

15. Vorrichtung zur Einstellung der Oberflächenbeschaffenheit in der Serienproduktion von Bauteilen umfassend
i) eine Messvorrichtung geeignet zur Durchführung eines Verfahrens gemäß einem oder mehreren der Ansprüche 1 bis 9 umfassend
a) eine Empfängerfläche zur Messung von Infrarotstrahlung und geeignet zur Ausgabe einer zur an der Empfängerfläche erfassten Bestrahlungsstärke proportionalen physikalischen Größe, vorzugsweise eines zur Bestrahlungsstärke proportionalen elektrischen Spannungssignals;
b) eine Transportvorrichtung, die dazu bestimmt ist, die einzelnen Bauteile der Serie an der Empfängerfläche der Messvorrichtung derart vorbeizuführen, dass die Bestimmung der Bestrahlungsstärke an der Empfängerfläche als vom Bauteil emittierte Infrarotstrahlung an mindestens einer definierten Position relativ zum Bauteil ermöglicht wird; und
c) optional eine Temperiereinheit geeignet zur Einstellung einer im Wesentlichen gleichen Temperatur des Bauteils zum Zeitpunkt seines Vorbeiführens an der Empfängerfläche der Messvorrichtung umfassend ein Heiz- und/oder Kühlelement und ggf. einen Temperaturfühler;
ii) einen Regler, der ausgelegt ist, die von der Messvorrichtung herausgegebene und zur an der Empfängerfläche erfassten Bestrahlungsstärke proportionale physikalische Messgröße als Ist-Wert der Oberflächenbeschaffenheit mit einem Referenzwert der gleichen physikalischen Messgröße als Soll-Wert der Oberflächenbeschaffenheit abzugleichen und eine zur Abweichung von Ist- und Sollwert eineindeutige Steuergröße an eine Stelleinrichtung auszugeben; und
iii) eine Stelleinrichtung, die geeignet ist die Steuergröße in eine Stellgröße für einen Prozessparameter in einem der Erfassung des Ist-Wertes der Oberflächengüte vorausgehenden Prozessschritt umzusetzen,
wobei Messvorrichtung, Regler und Stelleinrichtung einen Regelkreis zur Minimierung der Abweichung von Ist- und Sollwert der Oberflächenbeschaffenheit bilden.
